# EUROPEAN PATENT SPECIFICATION

(11) **EP 1 502 674 B1**
(45) Date of publication and mention of the grant of the patent: **26.08.2009**
(21) Application number: 04010311.1
(22) Date of filing: 30.04.2004
(51) Int. Cl.: B21D 43/05

(54) **Mechanical module applied to a part-transferring system**
Mechanische Baugruppe zur Anwendung in einem Transfersystem
Module mécanique pour l'application dans un système de transfert

(30) Priority: 23.06.2003 BR 0302078
(43) Date of publication of application: 02.02.2005
(73) Proprietor: de Sousa Monteiro, Luciano Trindade, Sao Caetano do Sul, Sao Paulo 09541-001 (BR)
(72) Inventor: de Sousa Monteiro, Luciano Trindade, Sao Caetano do Sul, Sao Paulo 09541-001 (BR)
(74) Representative: Betten & Resch

(56) References cited:
- EP-A- 0 849 015
- US-A- 4 875 931

## Description

This mechanical module has a larger range of applications in the field of processing stamped metal parts in presses, which are normally processed through various sequential stages in a press; this process is commonly called "Transfer".

The mechanical module applied to the part-transferring system in question is actually a more advanced development of prior patents filed under no. 8701734, US 4.875.931, US 5.941.119, and EP 0 849 015, filed by the same holder, and the purpose of the mechanical module is to build a cycloidal mechanical system to be used mainly in the field of automation to stamp all parts in general; the operating system of this module has an axis that furthers a right angle (vertical) movement after reaching a certain point when displaced. This results in operating another command axis and has the main advantage of being economical compared with usual systems, as it enables the use of a single axis, programmed at the ends to operate like two axes, thereby eliminating therefore one of the operating and commanding axes of a conventional three-axes transfer system, which usually uses three motor / operating / command servosystems, and gaining 1/3 of the most significant part of the cost of a transfer system.

Concerning the abovementioned patents, which habe been duly granted in Brazil, the USA, and Germany, the main advantage offered by this invention is that it offers another constructive alternative of the aforesaid module, in this case, one that is more appropriate to be used in specific types of applications, and which results in an economic gain in terms of construction, as it makes adjustment limitations, and limitations in terms of the space available viable to assemble the aforesaid module.

We will use the example of applying a transfer in presses for a better understanding of how the aforesaid transfer system operates; various phases are needed to complete the transfer operation of parts of a specific operational cycle, where the respective mechanical arrangements use a great amount of components, and especially one operating device for the operating axis, which goes through three distinct steps, that is to say: a) - forward movement of the set of drawn-back grippers; b) - (vertical) elevation of the said grippers to grasp the parts and transfer them (for the stamping operation, for instance); and c) - displacement of those parts to the following stamping stages, when the parts are liberated, and after which the mechanism returns to reinitiate the operational cycle.

Therefore, in the aim of reducing not only the amount of mechanical, operating, and commanding components, after conducting a meticulous project and planning, the mechanical module in focus herein was developed; this module can be used in any other manipulating system using two, three, or more operating axes through the adaptation and/or adjustment of the system so as to eliminate, as abovementioned, one of the commands, but without, however, hindering the amount of movements and/or operations as such.

Technically speaking, the purpose of this invention is basically to execute the same functions of the types of systems known, using one operating device less.

The above mentioned aims can be achieved by a mechanical module according to claim 1. In orderto demonstrate more specifically what has been explained so far concerning the mechanical module applied to the part-transferring system in question, you will find in appendix illustrating examples of a stamping machine transfer; the description and drawings illustrate one form and conception, that is, one preferred but not restricting characterization of the system as various options of forms and constructions are possible as the possibilities of applications are numerous and therefore, the constructive form may be adjusted to the installation mode and use; in the same way, the scope of this invention must be determined by the claims and not only by the illustrations in appendix, in which:
**FIG. 1** corresponds to a schematic section view of the module in question, at the start of the operational cycle of the module; the start of the movement of the belt responsible for displacing the mechanical set of the rule stand is indicated, and you will find a diagram compatible with this initial movement on the side;
**FIG. 2** -refers to the movement made by the said belt at the end of the first stage of the (horizontal) displacement of the said rails, and you will also find a diagram corresponding to this movement on the side;
**FIG. 3** **-** shows another subsequent step of the movement made by the said belt, during the displacement of the said rails towards the top of the vertical travel, with a diagram of the movement on the side;
**FIG. 4** **-** shows the belt in question initiating the return cycle of the vertical cycle, with the diagram representing this cycle on the side;
**FIG. 5** **-** shows the position of the belt under focus, after it has returned to its initial operational position where it moves the abovementioned rails, also with the diagram indicating this position;

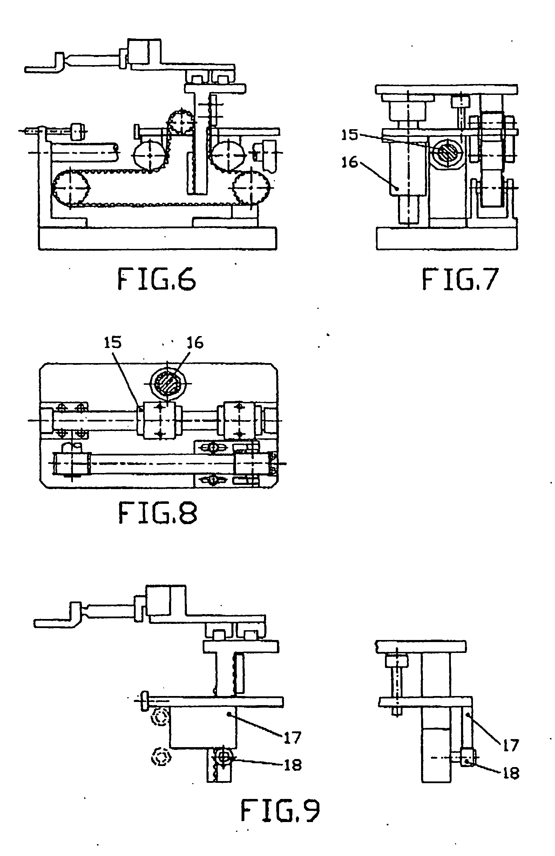

**FIG. 6** **-** refers to a vertical view of the entire transfer module, incorporating other components known to be used in the functional module such as the supporting base, etc.;
**FIG. 7** **-** represents a profile view of the same module as in the figure above, indicating the set of horizontal and vertical guides;
**FIG. 8** **-** presents a plan view of the said module as in the previous figure, assembled on a supporting base;
**FIG. 9** **-** illustrates a partial section of the guiding plate, as well as the guiding roller; these form the optional set that ensure the linear displacement of the axes so as to move the set of rails and grippers;

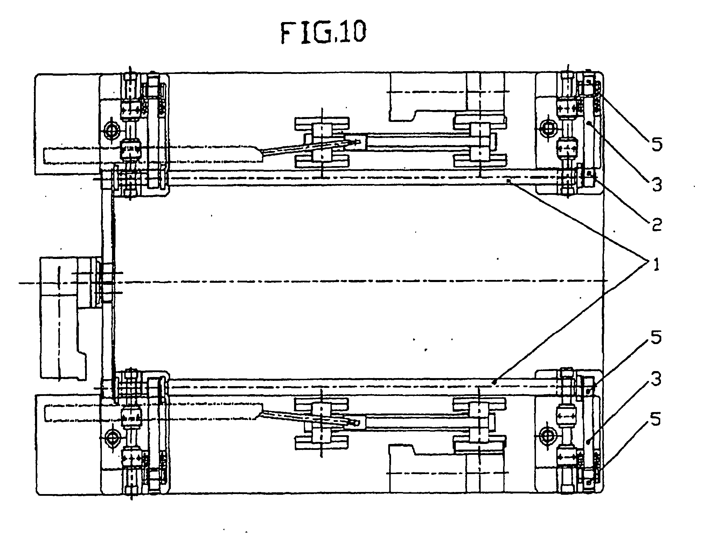

**FIG. 10** **-** corresponds to a view of the top part of the transfer system, showing the modules placed in the corners;

The mechanical module applied to the part-transferring system in reference in this patent filing application is basically made up of a drive axis (1) to which is assembled a drive toothed pulley (2), responsible for operating the toothed belt (3) that passes through the free-turn toothed pulleys (4 and 5), and through the smooth free-turn flat pulleys (6 and 7), whereby one of the ends of the abovementioned toothed belt (3) is fixed by the lock (8) of the toothed belt on one of the sides of the lifter (9), while the other end is fixed by the lock (10) of the belt in reference, at the opposite side of the abovementioned lifter (9), thereby ensuring that the displacement of the said belt (3) is compensated while in movement.

To carry out the operational cycle of the module in question, other complementary components are available like in the case of the horizontal stops (11) and vertical stops (12), the set of rails and grippers (13), and the linear bearings (14), on which the set of rails are displaced (13) through the "X" axis which will not be specified herein.

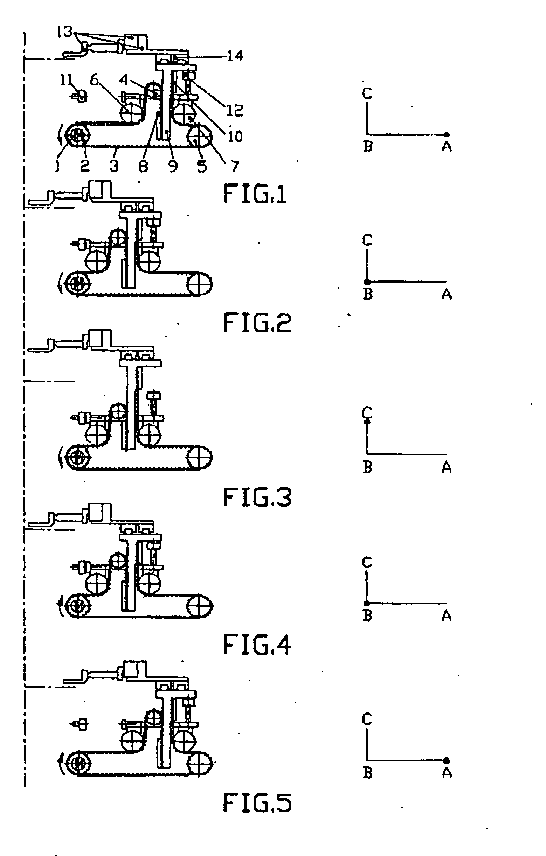

If we take as initial position that of the abovementioned module illustrated in Figure 1, the operational cycle of the module under focus occurs when the drive axis (1) starts turning anticlockwise and activates the drive toothed pulley (2) which then starts pulling the toothed belt (3) that is fixed by the lock (8) on the body of the lifter (9). The weight of this set includes, among others, the lifter (9) in reference, and the set of rails and grippers (13); above the friction of the horizontal guiding set (15), the abovementioned toothed belt (3) drags and displaces the entire set towards the center line of the equipment, where the module in question is assembled (the transfer in this configuration). This displacement, which is commonly called "Y" axis is executed until reaching the horizontal stop (11), which goes back to the arriving point "B" (Cf. the diagram in appendix).

While maintaining the continuity of the operation, the drive axis (1) and of the toothed belt (3), which passes through the free flat pulleys (6) and toothed pulleys (4), pulls and lifts the abovementioned lifter (9) and then the entire set of rails and grippers (13) as well as the linear bearings (14) until completing this part of the cycle (forward movement). This displacement is commonly called the "Z" axis. At this point i.e. "C" (Cf. the diagram in appendix), the operating of the said "X" axis usually starts the transfering the grippers / parts to the following step.

After the "X" transfer movement of the grippers / parts, the return cycle of the abovementioned module is initiated, in other words, the drive axis (1) starts turning in the opposite direction (clockwise) and then pulls the toothed belt (3), thereby passing through the free toothed pulley (5) and through the free flat pulley (7), and pulling it once the belt, as said before, is blocked by the lock (10). Therefore, this clockwise turn of the drive axis (1) makes the toothed belt (3) pull / lower the lifter (9) and consequently the entire set of rails and grippers (13) as well as the linear bearings (14) until reaching the vertical stop (12), which limits the vertical displacement at point "B" (Cf. figure 4 in appendix).

The continuity of the turn (operation) of the abovementioned drive axis (1) and of the toothed belt (3) in this case starts dislocating the module in question towards point "A" (Cf. diagram in appendix), thereby completing the return movement of the said module in a transfer system, and as it comes closer to point "A", the "X" axis starts returning, thereby completing the transfer and return cycle of the aforementioned transfer system.

It is important to stress that in the cases in which the weight of the set of rails and grippers (13) and of the linear bearings (14) does not manage to get rid of the friction of the set of horizontal guides (15), a guiding plate (17) may be used in the module in question, as well as a guiding roller (18) so as to ensure the displacement of the horizontal /vertical plane and vice versa. The vertical displacement is guided by means of a vertical guiding set (16).

You have a forward, up movement, then the transfer, and then a down, and backward movement, that is how the module in question, with the help of the known driver of the "X" axis, carries out the operations required to displace or transfer the processed parts inside the transferring equipment; and the most common application configuration of those transferring modules is the assembly of four modules like those described herein in the corners of the base of a tool, thereby leaving the center part for the assembly of a set of molds. The transferring grippers are joined to the two-by-two modules.

Finally, you may also use configurations made up of one, or two modules assembled on the same side (unilateral) or made up of two, four, six, or more modules, required to be assembled on both sides, symmetrically to the center line of the molds, or any other more appropriate configurations for specific applications.

## Claims

1. Mechanical module applied to a part-transferring system **characterized by** having a drive axis (1) linked to a drive toothed pulley (2) operating a toothed belt (3), which is constantly in contact with free toothed pulleys (4 and 5) and with free flat pulleys (6 and 7), whereby the toothed belt (3) passes through the free toothed pulleys (4 and 5) and the free flat pulleys (6 and 7), those components being used to move or displace a lifter (9) in whose body the said toothed belt (3) is maintained by the respective ends thanks to locks (8 and 10); and having a horizontal limiter travel (11), and a vertical limiter travel (12), as well as a set of horizontal guides (15), and vertical guides (16).

2. Mechanical module applied to a part-transferring system, according to Claim 1, **characterized by** the fact that the toothed belt (3) has its ends fixed to the lifter (9) so as to ensure the appropriate movement of the latter, and to compensate for the displacement of the toothed belts (3).

3. Mechanical module applied to a part-transferring system, according to Claim 1 or 2, **characterized by** the fact that the drive axis (1) moves clockwise or anticlockwise, according to a preset programming so as to meet the appropriate requirements of the operational cycle by operating the toothed belt (3) which displaces the lifter (9) through the set of guides (15 and 16).

4. Mechanical module applied to a part-transferring system, according to Claim 3, **characterized by** the fact that the horizontal limiter travel (11) limits the horizontal displacement of the "Y" axis, and by the fact that the continuous forward movement of the toothed belt (3) displaces the lifter (9) towards the "Z" axis.

5. Mechanical module applied to a part-transferring system, according to Claim 3, **characterized by** the fact that its vertical limiter travel (12) can limit the vertical /downwards displacement so that the continuity of the return of the toothed belt (3) stops the lifter (9) from going further down, and then makes this set return to the horizontal "Y" axis.

6. Mechanical module applied to a part-transferring system, according to one of Claims 1 to 5, **characterized by** the fact that it can use, as an option, a guiding plate (17) and a guiding roller (18) to ensure a proper linear displacement of the "Y", and "Z" axes of the limiting module.

## Patentansprüche

1. Mechanische Baugruppe zur Anwendung in einem Teile-Transfersystem, **dadurch gekennzeichnet, dass** sie eine Antriebsachse (1) aufweist, die mit einer Antriebs-Zahnriemenscheibe (2) verbunden ist, die einen Zahnriemen (3) antreibt, welcher ständig mit freien Zahnriemenscheiben (4 und 5) und mit freien flachen Riemenscheiben (6 und 7) in Kontakt steht, wodurch der Zahnriemen (3) die freien Zahnriemenscheiben (4 und 5) und die freien flachen Riemenscheiben (6 und 7) durchläuft, wobei diese Komponenten benutzt werden, um einen Heber (9) zu bewegen oder zu verlagern, in dessen Körper der Zahnriemen (3) mittels der jeweiligen Enden dank Verriegelungen (8 und 10) festgehalten wird; und mit einem horizontalen Wegbegrenzer (11) und einem vertikalen Wegbegrenzer (12) und außerdem einer Gruppe von horizontalen Führungen (15) und vertikalen Führungen (16).

2. Mechanische Baugruppe zur Anwendung in einem Teile-Transfersystem, gemäß Anspruch 1, **gekennzeichnet durch** die Tatsache, dass die Enden des Zahnriemens (3) an dem Heber (9) befestigt sind, um die richtige Bewegung des Letzteren sicherzustellen und um die Verlagerung der Zahnriemen (3) auszugleichen.

3. Mechanische Baugruppe zur Anwendung in einem Teile-Transfersystem, gemäß Anspruch 1 oder 2, **gekennzeichnet durch** die Tatsache, dass sich die Antriebsachse (1) in Übereinstimmung mit einer voreingestellten Programmierung im Uhrzeigersinn oder Gegenuhrzeigersinn bewegt, um die richtigen Erfordernisse des Arbeitszyklus zu erfüllen, indem der Zahnriemen (3) angetrieben wird, welcher den Heber (9) **durch** die Gruppe von Führungen (15 und 16) verlagert.

4. Mechanische Baugruppe zur Anwendung in einem Teile-Transfersystem, gemäß Anspruch 3, **gekennzeichnet durch** die Tatsache, dass der horizontale Wegbegrenzer (11) die Horizontalverlagerung der "Y"-Achse begrenzt, und **durch** die Tatsache, dass die fortdauernde Vorwärtsbewegung des Zahlriemens (3) den Heber (9) in Richtung auf die "Z"-Achse verlagert.

5. Mechanische Baugruppe zur Anwendung in einem Teile-Transfersystem, gemäß Anspruch 3, **gekennzeichnet durch** die Tatsache, dass ihr vertikaler Wegbegrenzer (12) die Vertikal-/Abwärtsverlagerung begrenzen kann, so dass die Fortdauer der Rückkehr des Zahlriemens (3) den Heber (9) daran hindert, weiter nach unten zu gehen, und dann diese Gruppe zur horizontalen "Y"-Achse zurückkehren lässt.

6. Mechanische Baugruppe zur Anwendung in einem Teile-Transfersystem, gemäß einem der Ansprüche 1 bis 5, **gekennzeichnet durch** die Tatsache, dass sie als Option eine Führungsplatte (17) und eine Führungsrolle (18) benutzen kann, um eine geeignete lineare Verlagerung der "Y"- und "Z"-Achsen der Begrenzungsbaugruppe sicherzustellen.

## Revendications

1. Module mécanique appliqué à un système de transfert de pièces, **caractérisé par** le fait de comprendre un axe d'entraînement (1) relié à une poulie d'entraînement (2) dentée actionnant une courroie crantée (3), en contact constant avec des poulies dentées (4 et 5) folles et avec des poulies plates (6 et 7) folles, de manière que la courroie crantée (3) passe par les poulies dentées (4 et 5) folles et les poulies plates (6 et 7) folles, ces composants étant utilisés pour mouvoir ou déplacer un leveur (9) dans le corps duquel ladite courroie crantée (3) est maintenue par les extrémités respectives, grâce à des verrous (8 et 10) ; et comprenant un limiteur de déplacement horizontal (11) et un limiteur de déplacement vertical (12), ainsi qu'un jeu de guides horizontaux (15) et de guides verticaux (16).

2. Module mécanique appliqué à un système de transfert de pièces, selon la revendication 1, **caractérisé par le fait que** la courroie crantée (3) a ses extrémités fixées au leveur (9), de manière à assurer le mouvement approprié de ce dernier, et de compenser le déplacement des courroies crantées (3).

3. Module mécanique appliqué à un système de transfert de pièces, selon la revendication 1 ou 2, **caractérisé par le fait que** l'axe d'entraînement (1) se déplace dans le sens des aiguilles d'une montre ou dans le sens inverse de celui des aiguilles d'une montre, selon une programmation préétablie, de manière à satisfaire aux exigences appropriées du cycle opérationnel, en actionnant la courroie crantée (3) qui déplace le leveur (9) pour la faire passer par le jeu de guides (15 et 16).

4. Module mécanique appliqué à un système de transfert de pièces, selon la revendication 3, **caractérisé par le fait que** le limiteur de déplacement horizontal (11) limite le déplacement horizontal de l'axe "Y", et **par le fait que** le déplacement d'avancement continu de la courroie crantée (3) déplace le leveur (9) vers l'axe "Z".

5. Module mécanique appliqué à un système de transfert de pièces, selon la revendication 3, **caractérisé par le fait que** son limiteur de déplacement vertical (12) peut limiter le déplacement vertical/vers le bas, de manière que la continuité du retour de la courroie crantée (3) empêche le leveur (9) de descendre plus encore, et faisant ensuite que cet ensemble revienne à l'axe horizontal "Y".

6. Module mécanique appliqué à un système de transfert de pièces selon l'une des revendications 1 à 5, **caractérisé par le fait qu'**il peut utiliser, à titre d'option, une plaque de guidage (17) et un galet de guidage (18), pour assurer un déplacement linéaire correct des axes "Y" et "Z" du module de limitation.
